# DEMANDE DE BREVET EUROPEEN

(11) **EP 1 028 575 A2**
(43) Date de publication de la demande: **16.08.2000**
(21) Numéro de dépôt: 00102868.7
(22) Date de dépôt: 11.02.2000
(51) Int. Cl.: H04M 1/274, H04M 1/725

(54) **Telekommunikationssystem zur virtuellen Speichererweiterung in einem Teilnehmerendgerät und dazugehöriges Verfahren**

(30) Priorité: 12.02.1999 DE 19905957
(71) Demandeur: SIEMENS AKTIENGESELLSCHAFT, 80333 München (DE)
(72) Inventeur: Slonina, Bernhard, 44359 Dortmund (DE); Hadt, Alexander, 59174 Kamen (DE); Beerens, Hans-Georg, 46395 Bocholt (DE); Rüther, Ralf, 48653 Coesfeld (DE); Driessen, Peter Paul Matthias, 47805 Krefeld (DE); Scholz, Peter, 46397 Bocholt (DE)

(57) **Zusammenfassung**

Die Erfindung betrifft ein Telekommunikationssystem und ein dazugehöriges Verfahren zur virtuellen Speichererweiterung in einem Teilnehmerendgerät. Das Telekommunikationssystem besteht hierbei aus einer Vielzahl von Teilnehmerendgeräten (1 bis n), die jeweils eine Speichereinheit (SP1 bis SPn) zum Speichern von Telefoneinträgen (TE) aufweisen und zumindest einer Basisstation (B) zum internen Verbinden von zwei Teilnehmerendgeräten oder externen Verbinden eines Teilnehmerendgeräts mit einem Kommunikationsnetzwerk (N). Jedes Teilnehmerendgerät (1 bis n) besitzt hierbei eine Leseeinheit zum dezentralen Lesen von Telefoneinträgen in Speichereinheiten der anderen Teilnehmerendgeräte über die Basisstation (B).

## Description

Die Erfindung bezieht sich auf ein Telekommunikationssystem zur virtuellen Speichererweiterung in einem Teilnehmerendgerät sowie ein dazugehöriges Verfahren und insbesondere auf ein schnurloses DECT-Kommunikationssystem mit einer Vielzahl von um eine Basisstation satellitenförmig angeordneten Teilnehmerendgeräten.

Zur Erhöhung der Anzahl von Teilnehmerendgeräten an einem Telefonhauptanschluß oder einem Telefonnebenstellenanschluß werden zunehmend Telekommunikationssysteme verwendet, die aus einer Basisstation und einer Vielzahl von Teilnehmerendgeräten bestehen. Die Basisstation ist hierbei mit einem öffentlichen oder privaten Neztwerk verbunden und ordnet darüber hinaus jedem seiner Teilnehmerendgeräte eine bestimmte Kennung zu. Dadurch kann sowohl eine interne Verbindung zwischen den Teilnehmerendgeräten als auch eine externe Verbindung von einem jeweiligen Teilnehmerendgerät zum öffentlichen oder privaten Netzwerk realisiert werden.

Üblicherweise besitzt jedes aus der Vielzahl von Teilnehmerendgeräten eine nichtflüchtige Speichereinheit zum Speichern von endgerätespezifischen Daten, Wahlwiederholungslisten, Kurzwahllisten, Telefonbuchlisten usw.. Aufgrund der begrenzten Kapazität dieser nichtflüchtigen Speichereinheiten ist jedoch insbesondere die Anzahl von Telefoneinträgen in einer Telefonbuchliste begrenzt (ca. 80 - 100 Einträge). Andererseits ist eine Vergrößerung der Kapazität dieser nichtflüchtigen Speichereinheiten mit hohen Kosten für die dazu notwendigen und teuren Speicherbausteine verbunden.

Der Erfindung liegt daher die Aufgabe zugrunde, ein Telekommunikationssystem der eingangs beschriebenen Art und ein dazugehöriges Verfahren zu schaffen, bei dem eine Speicherkapazität ohne Mehrkosten vergrößert wird.

Erfindungsgemäß wird diese Aufgabe hinsichtlich des Verfahrens durch die Maßnahmen des Patentanspruchs 1 und hinsichtlich des Telekommunikationssystems durch die Merkmale des Patentanspruchs 5 gelöst.

Insbesondere durch das Auswählen eines weiteren Teilnehmerendgeräts, auf dessen Speichereinheit ein Lesezugriff über die Basisstation erfolgen soll, und dem nachfolgenden Schritt zum Lesen der Dateninhalte dieser Speichereinheit erhält man eine dezentrale Speicherverwaltung, bei der jedes Teilnehmerendgerät nicht nur auf die Telefoneinträge seiner lokalen Speichereinheit, sondern auch auf die Telefoneinträge der Speichereinheiten der weiteren im Telekommunikationssystem befindlichen Teilnehmerendgeräte zugreifen kann.

Jedes Teilnehmerendgerät besitzt hierfür zusätzlich zu seiner lokalen Schreib/Leseeinheit zum lokalen Beschreiben/Lesen von Telefoneinträgen seiner eigenen Speichereinheit eine Leseeinheit zur dezentralen Lesen von Telefoneinträgen der Speichereinheiten der anderen Teilnehmerendgeräte. Auf diese Weise kann ohne kostspielige Erweiterung der Speicherkapazität eines jeweiligen Teilnehmerendgeräts seine virtuelle Speicherkapazität erheblich vergrößert werden.

In den Unteransprüchen sind vorteilhafte Ausgestaltungen der Erfindung gekennzeichnet.

Die Erfindung wird nachstehend anhand eines Ausführungsbeispiels unter Bezugnahme auf die Zeichnung näher beschrieben.

Es zeigen:
Figur 1 eine schematische Darstellung des erfindungsgemäßen Telekommunikationssystems zur virtuellen Speichererweiterung;
Figur 2 eine schematische Darstellung eines Teilnehmerendgeräts, wie es im Telekommunikationssystem gemäß Figur 1 verwendet wird; und
Figur 3 ein Signalisierungsprotokoll eines Verfahrens zur virtuellen Speichererweiterung gemäß einem bevorzugten Ausführungsbeispiel.

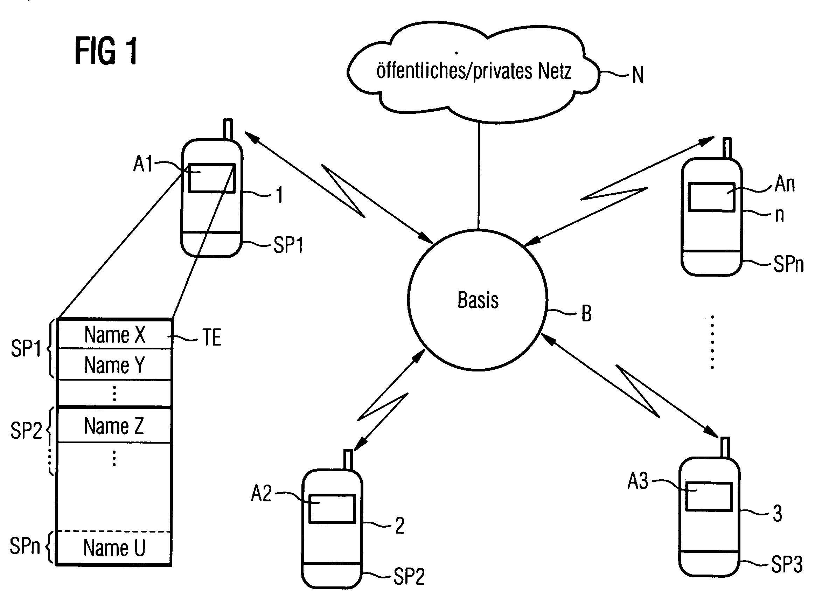

Figur 1 zeigt eine schematische Darstellung eines erfindungsgemäßen Telekommunikationssystems zur virtuellen Speichererweiterung in einem Teilnehmerendgerät. Das Telekommunikationssystem gemäß Figur 1 besteht vorzugsweise aus einer Basisstation B, die mit einem öffentlichen oder privaten Netzwerk N in Verbindung steht. Die Basisstation B wird demzufolge entweder als Telefonhauptanschluß oder als Telefon-Nebenstellenanschluß betrieben. Mit der Basisstation B können eine Vielzahl von Teilnehmerendgeräten 1, 2, 3 bis n verbunden werden. Bei den Teilnehmerendgeräten 1 bis n gemäß Figur 1 handelt es sich vorzugsweise um schnurlose DECT-Telefone, die über eine Funkverbindung mit der Basisstation B in Verbindung stehen. Jedem der im Telekommunikationssystem gemäß Figur 1 befindlichen Teilnehmerendgeräte wird eine interne Rufnummer bzw. Kennung zugewiesen. In gleicher Weise kann der Basisstation B eine Stationsnummer oder Stationskennung zugewiesen werden(, wodurch die Verwendung von mehreren Basisstationen B in dem Telekommunikationssystem möglich ist).

Aufgrund der Zuordnung von internen Rufnummern für die einzelnen Teilnehmerendgeräte 1 bis n (und von Stationsnummern für die Basisstationen B) ist sowohl eine interne Kommunikation unter den Teilnehmerendgeräten über die Basisstation(en) B als auch eine externe Kommunikation eines Teilnehmerendgeräts über die Basisstation(en) B und ein öffentliches oder privates Netzwerk N zu einem nicht dargestellten externen Teilnehmerendgerät möglich.

Gemäß Figur 1 besitzt jedes Teilnehmerendgerät 1 - n eine Speichereinheit SP1 - SPn, in der üblicherweise sowohl endgerätespezifische Daten als auch Listen für Telefoneinträge gespeichert sind. Vorzugsweise besteht jede dieser Speichereinheitn SP1, SP2, SP3, ..., SPn aus einem nichtflüchtigen Speicher wie z. B. einem EEPROM oder einem FLASHROM. Zur Speicherung von jeweiligen Namen mit einer dazugehörigen Rufnummer besitzt jedes dieser Teilnehmerendgeräte üblicherweise ein sogenanntes Telefonbuch, das als Telefonbuchliste in der nichtflüchtigen Speichereinheit SP1 - SPn abgelegt ist. Auf diese Weise kann jeder Benutzer eines Teilnehmerendgeräts sein spezielles Telefonbuch mit speziellen Telefoneinträgen TE anlegen. Für die Ausgabe der so abgespeicherten Telefoneinträge besitzt jedes Teilnehmerendgerät 1 - n eine jeweilige Ausgabeeinheit A1 - An. Vorzugsweise besteht diese Ausgabeeinheit A1 - An aus einer grafischen Anzeigeeinheit, sie kann jedoch auch eine akustische Wiedergabeeinheit oder eine Kombination von grafischer und akustischer Wiedergabeeinheit aufweisen.

Gemäß der vorliegenden Erfindung besitzt nunmehr jedes Teilnehmerendgerät zusätzlich zu seiner lokalen Schreib/Leseeinheit zum Beschreiben/Lesen der lokalen Speichereinheit eine Leseeinheit zum dezentralen Lesen von Telefoneinträgen in den Speichereinheiten der weiteren Teilnehmerendgeräte. Genauer gesagt kann gemäß Figur 1 ein Teilnehmerendgerät 1 nicht nur die Telefoneinträge "Name X" und "Name Y" aus seiner eigenen Speichereinheit SP1 auslesen und an der Ausgabeeinheit A1 anzeigen, sondern darüber hinaus beispielsweise einen Telefoneintrag "Name Z" aus der Speichereinheit 2 des Teilnehmerendgeräts 2 und einen Telefoneintrag "Name U" aus der Speichereinheit SPn des Teilnehmerendgeräts n. Auf diese Weise ermöglicht das Telekommunikationssystem gemäß Figur 1 eine virtuelle Speichererweiterung für das Teilnehmerendgerät 1, ohne seine dazugehörige Speichereinheit 1 tatsächlich zu vergrößern. Die Kosten sind dadurch für jedes Teilnehmerendgerät weiter verringert. Ferner wird der Benutzerkomfort für einen jeweiligen Benutzer verbessert, da eine oftmals mühsame Eingabe von Telefonbucheinträgen entfällt, sofern ein Mitglied (Teilnehmerendgerät) des Telekommunikationssystems einen vorbestimmten Telefoneintrag bereits durchgeführt hat.

Vorzugsweise besitzt jedes Teilnehmerendgerät 1 bis n eine nicht dargestellte Speicherzugriffsanzeige, die einen externen Speicherzugriff seinem Benutzer anzeigt. Dadurch kann jedem Benutzer ein Speicherzugriff auf seine Speichereinheit durch einen anderen Benutzer angezeigt werden. Grundsätzlich könnte hierbei auch die interne Rufnummer des jeweiligen Teilnehmerendgeräts angezeigt oder abgespeichert werden. Zur Verhinderung eines nichtauthorisierten Speicherzugriffs durch eines der weiteren Teilnehmerendgeräte auf eine lokale Speichereinheit können ferner einzelne Telefoneinträge oder Gruppen von Telefoneinträgen mit einer Kennung versehen werden, die nur ein lokales Lesen der Telefoneinträge ermöglichen, jedoch ein dezentrales Lesen dieser Telefoneinträge verhindern. Dadurch wird das Auslesen von privaten bzw. persönlichen Telefoneinträgen durch Dritte, d.h. andere Mitglieder des Telekommunikationssystems, verhindert.

Nachfolgend wird die Funktionsweise eines Teilnehmerendgeräts 1 im Telekommunikationssystem gemäß Figur 1 im einzelnen beschrieben.

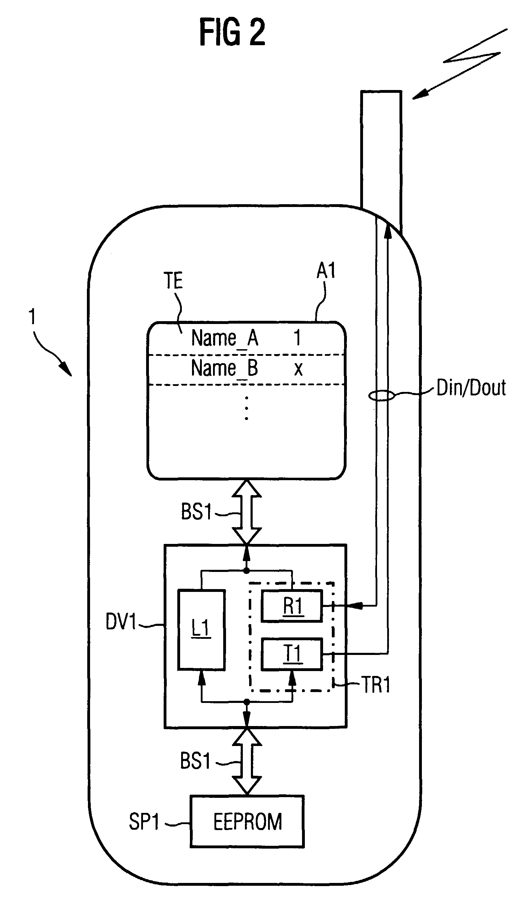

Figur 2 zeigt eine schematische Darstellung des Teilnehmerendgeräts 1 mit seinen für die Erfindung wesentlichen Funktionsblöcken. Vorzugsweise handelt es sich bei dem Teilnehmerendgerät 1 um ein schnurloses DECT-Telefon, das über eine Funkverbindung mit der Basisstation B in Verbindung steht. Die über die Funkverbindung übertragenen Daten werden über einen Datenpfad DIN/DOUT einer Datenverarbeitungseinheit DV1 zugeführt, die vorzugsweise aus einem Mikroprozessor oder Mikrocomputer besteht. Die Datenverarbeitungseinheit DV1 steht über ein Bussystem BS1 sowohl mit seiner eigenen nichtflüchtigen Speichereinheit SP1 als auch seiner Ausgabeeinheit A1 in Verbindung. Ferner steht die Datenverarbeitungseinheit mit einer nicht dargestellten Eingabeeinheit in Verbindung und steuert alle wesentlichen Funktionen des Teilnehmerendgeräts 1.

Die nichtflüchtige Speichereinheit SP1 besteht vorzugsweise aus einem EEPROM, sie kann jedoch auch ein FLASHROM oder einen sonstigen persistenten Speicher aufweisen. Eine bereits aus herkömmlichen Teilnehmerendgeräten bekannte Schreib/ Leseeinheit L1 ermöglicht das Beschreiben und Auslesen der zum jeweiligen Teilnehmerendgerät gehörigen nichtflüchtigen Speichereinheit SP1. Genauer gesagt kann über die Schreib/Leseeinheit L1 beispielsweise ein Telefoneintrag TE mit einem Namen und einer dazugehörigen Rufnummer in einer Telefonbuchliste der nichtflüchtigen Speichereinheit SP1 abgelegt werden. Zum schnellen und komfortablen Durchführen eines Verbindungsaufbaus kann zu einem späteren Zeitpunkt über nachfolgend nicht näher beschriebene Suchtunktionen in der Telefonbuchliste nach den jeweiligen Namen gesucht und die dazugehörigen Rufnummern ausgewählt werden. Ein derartiges Suchen und Blättern in Telefonbuchlisten, Wahlwiederholungslisten und Kurzwahllisten erfolgt üblicherweise über nachfolgend nicht näher beschriebene Menüpunkte, die in Verbindung mit der Ausgabeeinheit A1 ausgewählt werden können.

Zusätzlich zu dieser bereits bekannten Schreib/Leseeinheit L1 besitzt jedoch das erfindungsgemäße Teilnehmerendgerät eine Leseeinheit TR1 zum dezentralen Lesen von Telefoneinträgen. Genauer gesagt besitzt die Leseeinheit TR1 zum dezentralen Lesen von Telefoneinträgen in den Speichereinheiten der anderen Teilnehmerendgeräte im Telekommunikationssystem eine Sendeeinheit T1 zum Senden einer dezentralen Speicheranforderung und eine Empfangseinheit R1 zum Empfangen einer dezentralen Speicheranforderung. Soll beispielsweise vom Teilnehmerendgerät 1 auf einen Telefoneintrag in einem anderen Teilnehmerendgerät zugegriffen werden, so wählt ein Benutzer des Teilnehmerendgeräts 1 einen entsprechenden Menüpunkt oder eine fest zugeordnete Taste für diesen dezentralen Lesezugriff aus, wodurch die Sendeeinheit T1 eine dezentrale Speicheranforderung mit Angabe des jeweiligen Teilnehmerendgeräts (interne Rufnummer) an die Basisstation B über den Datenpfad DIN/DOUT abgibt. Die Speicheranforderung wird von der Basisstation B an das durch die interne Rufnummer gekennzeichnete Teilnehmerendgerät weitergeleitet und dort von einer ebenfalls vorhandenen Empfangseinheit Rx (x = 2 bis n) empfangen. Empfängt nunmehr eine Empfangseinheit Rx eine derartige dezentrale Speicheranforderung, so sendet die dazugehörige Sendeeinheit Tx eine entsprechend der Anforderung vorbestimmte Anzahl von Telefoneinträgen aus seiner eigenen Speichereinheit SPx über die Basisstation B an das die Speicheranforderung sendende Teilnehmerendgerät 1 zurück. Die Empfangseinheit R1 im Teilnehmerendgerät 1 empfängt diese dezentral ausgelesenen Telefoneinträge TE und gibt sie über die Ausgabeeinheit A1 aus.

Gemäß Figur 2 kann jeder ausgelesene Telefoneintrag TE neben seinem jeweiligen Namen "Name_A", "Name_B" ferner eine Ursprungskennung "1", "x" aufweisen, die den Herkunftsort (Quelle) bzw. das jeweilige Teilnehmerendgerät des angezeigten Telefoneintrags TE kennzeichnet. Dadurch wird eine Benutzung der virtuellen Speichererweiterung weiter vereinfacht.

Nachfolgend wird ein Verfahren zum dezentralen Lesen der Telefoneinträge TE im einzelnen beschrieben.

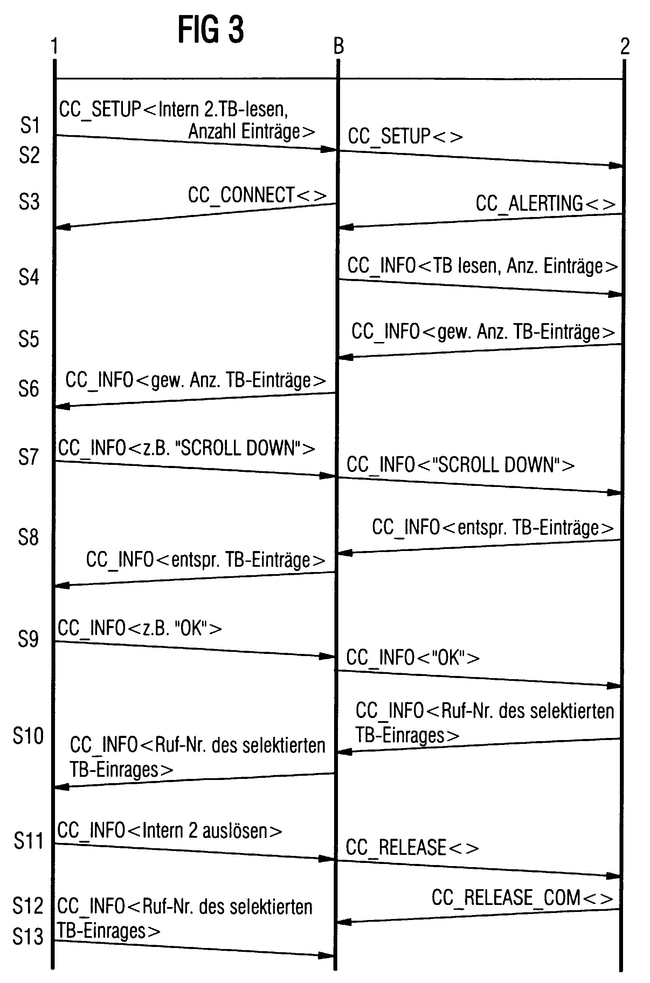

Figur 3 zeigt ein DECT-Signalisierungsprotokoll der wesentlichen Verfahrensschritte zur virtuellen Speichererweiterung in einem Telekommunikationssystem bestehend aus dem Teilnehmerendgerät 1, der Basisstation B und dem Teilnehmerendgerät 2. In einem Signalisierungsschritt S1 wird über den DECT-Befehl "CC_SETUP" eine interne Verbindung zum Teilnehmerendgerät 2 und das Lesen einer vorbestimmten Anzahl von Telefoneinträgen aus einer Telefonbuchliste TB des Teilnehmerendgeräts 2 bei der Basisstation B angefordert. In einem Signalisierungsschritt S2 wird dieser Befehl zum Aufbauen einer internen Verbindung von der Basisstation B an das entsprechende Teilnehmerendgerät 2 weitergeleitet. In einem Signalisierungsschritt S3 wird dieser interne Verbindungsaufbau der Basisstation B mit dem Teilnehmerendgerät 2 dem Teilnehmerendgerät 1 mitgeteilt. In einem Signalisierungsschritt S4 sendet nunmehr die Basisstation B die Anforderung "vorbestimme Anzahl von Telefoneinträgen aus der Telefonbuchliste TB lesen" über den Signalisierungsbefehl "CC_INFO" an das Teilnehmerendgerät 2, wodurch ein internes Auslesen der angeforderten Telefoneinträge durchgeführt wird. In einem Signalisierungsschritt S5 wird nach dem Auslesen der gewünschten Anzahl von Telefoneinträgen im Teilnehmerendgerät 2 die jeweilige Information über den Signalisierungsbefehl "CC_INFO" zunächst an die Basisstation B und von dieser in einem Signalisierungsschritt S6 an das Teilnehmerendgerät 1 gesendet. Die so übertragenen Informationen werden im Teilnehmerendgerät 1 von der Empfangseinheit R1 empfangen und über die Ausgabeeinheit A1 ausgegeben.

Zum Suchen bzw. Blättern für dezentral gelesene Telefoneinträge können beispielsweise die nachfolgend beschriebenen Signalisierungsschritte durchgeführt werden. Hierbei soll beim dezentralen Lesen der Speichereinheit 2 im Teilnehmerendgerät 2 ein Weiterblättern ("scroll down") veranschaulicht werden.

In einem Signalisierungsschritt S 7 wird eine entsprechende Anforderung zum Blättern ("scroll down") über den Signalislerungsbefehl "CC_INFO" zunächst an die Basisstation B und von dieser an das Teilnehmerendgerät 2 weitergeleitet. Wiederum werden diese Informationen von der Empfangseinheit R2 des Teilnehmerendgeräts 2 empfangen und eine entsprechende "Blätterfunktion" zum Auslesen der weiteren Telefoneinträge in der Speichereinheit SP2 durchgeführt. In einem Signalisierungsschritt S8 werden anschließend diese ausgelesenen Telefoneinträge aus der Telefonbuchliste TB zunächst an die Basisstation B und von dieser zum Teilnehmerendgerät 1 über den Signalisierungsbefehl "CC_INFO" übertragen. In ähnlicher Weise kann zu bereits dezentral gelesenen Telefoneinträgen zurück geblättert werden ("scroll up").

Wurde im Teilnehmerendgerät 1 ein geeigneter Telefoneintrag TE beim vorstehend beschriebenen dezentralen Lesen ermittelt, so kann er wiederum über einen Menüpunkt oder eine Festtaste bestätigt werden ("OK"). Diese Bestätigung wird in einem Signalisierungsschritt S9 von der Sendeeinheit T1 des Teilnehmerendgeräts 1 zur Basisstation B und von dieser zum Teilnehmerendgerät 2 übertragen. Die Übertragung der Bestätigungsinformation findet wiederum im Signalisierungsbefehl "CC_INFO" statt. Im Teilnehmerendgerät 2 wird diese vom Teilnehmerendgerät 1 übertragene Bestätigung ausgewertet, wodurch beispielsweise der zweite Teil des Telefonbucheintrgs, d. h. die dazugehörige Rufnummer des bestätigten Telefoneintrags in einem Signalisierungsschritt S10 zunächst an die Basisstation B und von dieser an das Teilnehmerendgerät 1 übertragen wird.

Nach Empfangen der dazugehörigen Rufnummer des bestätigten Telefoneintrags wird vorzugsweise die interne Verbindung zum Teilnehmerendgerät 2 gelöst, wobei in einem Schritt S11 ein entsprechender Befehl an die Basisstation B und von dieser der Befehl "CC_RELEASE" an das Teilnehmerendgerät 2 abgegeben wird. In einem Signalisierungsschritt S12 wird anschließend die Auflösung der internen Verbindung vom Teilnehmerendgerät 2 an die Basisstation B bestätigt, wodurch in einem nachfolgenden Signalisierungsschritt S13 ein Verbindungsaufbau vom Teilnehmerendgerät 1 zur Basisstation B für die ausgewählte externe Rufnummer eingeleitet werden kann.

Die vorstehend beschriebene Erfindung wurde für schnurlose DECT-Telefone beschrieben. Sie ist jedoch nicht darauf beschränkt und kann sich auch auf schnurgebundene Teilnehmerendgeräte oder eine Kombination von schnurlosen und schnurgebundenen Teilnehmerendgeräten beziehen. Insbesondere besteht auch die Möglichkeit, mehrere Basisstationen B im Telekommunikationssystem zu verwenden, wodurch sich die Anzahl der Teilnehmerendgeräte und somit die virtuelle Speichererweiterung weiter erhöht. Darüber hinaus kann anstelle des beschriebenen DECT-Signalisierungsprotokolls auch ein anderes Übertragungsprotokoll zum Übertragen der jeweiligen Befehle für das dezentrale Auslesen von Telefoneinträgen verwendet werden. Beispielsweise können die Daten der Telefoneinträge, z.B. "Name" und "Rufnummer", gemeinsam ausgelesen werde, wodurch ein Lesevorgang vereinfacht wird. Ferner kann ein dezentraler Suchvorgang anstelle der Befehle "scroll up/down" durch Eingeben und Übertragen eines jeweiligen Anfangsbuchstabens eines gesuchten Telefoneintrags realisiert werden.

## Patentansprüche

1. Verfahren zur virtuellen Speichererweiterung in einem Teilnehmerendgerät (1) eines Telekommunikationssystems mit einer Vielzahl von Teilnehmerendgeräten (1 - n) und zumindest einer Basisstation (B) zum Verbinden der Vielzahl von Teilnehmerendgeräten,
bestehend aus den Schritten
a) Auswählen eines Teilnehmerendgeräts (2), auf dessen Speichereinheit (SP2) ein Lesezugriff erfolgen soll;
b) Aufbauen einer internen Verbindung zum ausgewählten Teilnehmerendgerät (2) über die Basisstation (B);
c) Anfordern einer vorbestimmten Anzahl von Telefoneinträgen aus der Speichereinheit (SP2) des ausgewählten Teilnehmerendgeräts (2);
d) Auslesen der vorbestimmten Anzahl von Telefoneinträgen (TE);
e) Übertragen der ausgelesenen Telefoneinträge (TE) über die Basisstation (B); und
f) Ausgeben der übertragenen Telefoneinträge (TE).

2. Verfahren nach Patentanspruch 1,
**dadurch gekennzeichnet,**
daß das Ausgeben der vorbestimmten Anzahl von Telefoneinträgen (TE) ein grafisches Anzeigen und/oder akustisches Wiedergeben ist.

3. Verfahren nach Patentanspruch 1 oder 2,
**dadurch gekennzeichnet,**
daß die Telefoneinträge (TE) Namen einer Telefonbuchliste darstellen.

4. Verfahren nach Patentanspruch 3,
**gekennzeichnet durch** die weiteren Schritte:
g) Auswählen und Bestätigen eines ausgegebenen Telefoneintrags (TE);
h) Übertragen der Auswahl und Bestätigung zum ausgewählten Teilnehmerendgerät (2);
i) Übertragen einer zum ausgewählten Telefoneintrag (TE) dazugehörigen Rufnummer über die Basisstation (B);
j) Lösen der internen Verbindung zum ausgewählten Teilnehmerendgerät (2); und
k) Aufbauen einer externen Verbindung zur übertragenen Rufnummer über die Basisstation (B).

5. Telekommunikationssystem zur virtuellen Speichererweiterung in einem Teilnehmerendgerät bestehend aus
einer Vielzahl von Teilnehmerendgeräten (1 - n), die jeweils eine Speichereinheit (SP1 - SPn) zum Speichern von Telefoneinträgen (TE) aufweisen und
zumindest einer Basisstation (B) zum internen Verbinden der Vielzahl von Teilnehmerendgeräten untereinander oder externen Verbinden eines Teilnehmerendgeräts mit einem Kommunikations-Netzwerk (N),
**dadurch gekennzeichnet,**
daß jedes Teilnehmerendgerät (1 - n) eine Leseeinheit (TR1 - TRn) zum dezentralen Lesen von Telefoneinträgen der Speichereinheiten der anderen Teilnehmerendgeräte über die Basisstation (B) aufweist.

6. Telekommunikationssystem nach Patentanspruch 5,
**dadurch gekennzeichnet,**
daß die Zugriffseinheit (TR1) eine Sendeeinheit (T1) zum Senden einer dezentralen Speicheranforderung und eine Empfangseinheit (R1) zum Empfangen einer dezentralen Speicheranforderung aufweist, wobei die Sendeeinheit (T1) nach Empfang einer dezentralen Speicheranforderung zumindest einen angeforderten Telefoneintrag aus der Speichereinheit (SP1) ausliest und an das die Speicheraufforderung sendende Teilnehmerendgerät zurücksendet.

7. Telekommunikationssystem nach Patentanspruch 5 oder 6,
**dadurch gekennzeichnet,**
daß jedes Teilnehmerendgerät eine Schreib/Leseeinheit (L1 - Ln) zum lokalen Beschreiben/Lesen von Telefoneinträgen (TE) der Speichereinheit des eigenen Teilnehmerendgeräts aufweist.

8. Telekommunikationssystem nach einem der Patentansprüche 5 bis 7,
**dadurch gekennzeichnet,**
daß jedes Teilnehmerendgerät (1 - n) eine Ausgabeeinheit (A1 - An) zum Ausgeben der dezentral und/oder lokal gelesenen Telefoneinträge (TE) aufweist.

9. Telekommunikationssystem nach Patentanspruch 8,
**dadurch gekennzeichnet,**
daß die Ausgabeeinheit (A1 - An) eine grafische und/oder akustische Anzeigeeinheit darstellt.

10. Telekommunikationssystem nach einem der Patentansprüche 5 bis 9,
**dadurch gekennzeichnet,**
daß die Leseeinheit (TR1 - TRn) und/oder die Schreib/Leseeinheit (L1 - Ln) durch eine Datenverarbeitungseinheit (DV1 - DVn) realisiert sind.

11. Telekommunikationssystem nach einem der Patentansprüche 5 bis 9,
**dadurch gekennzeichnet,**
daß die Telefoneinträge (TE) Telefonbucheinträge darstellen, die einen Namen und eine dazugehörige Rufnummer aufweisen.
